# EUROPEAN PATENT SPECIFICATION

(11) **EP 2 523 173 B1**
(45) Date of publication and mention of the grant of the patent: **20.09.2017**
(21) Application number: 11003807.2
(22) Date of filing: 10.05.2011
(51) Int. Cl.: G08G 1/16, G06K 9/00

(54) **Driver assisting system and method for a motor vehicle**
Fahrerassistenzsystem und -verfahren für ein Kraftfahrzeug
Système d'assistance au conducteur et procédé pour véhicule à moteur

(43) Date of publication of application: 14.11.2012
(73) Proprietor: Autoliv Development AB, 447 83 Vårgårda (SE)
(72) Inventor: Hedberg, Ognjan, 58222 Linköping (SE); Hammarström, Per Jonas, 58337 Linköping (SE)
(74) Representative: Müller Verweyen

(56) References cited:
- EP-A2- 1 033 694
- DE-A1-102008 011 228

## Description

The invention relates to a generic driver assisting system for a motor vehicle. The invention also relates to a corresponding driver assisting method.

When an emergency vehicle like a police car, an ambulance or a fire engine is approaching or near the own vehicle, drivers may become aware too late or not at all for different reasons, for example lack of attention, loud music or noise, hearing impairment, or others. This can result in obstruction of the emergency vehicle and dangerous traffic situations because emergency vehicles usually have to drive fast. But even if the driver becomes aware of the emergency vehicle, he may not be able to react in the correct manner because prescribed actions may vary between countries, states or more generally geographical areas due to different kinds of national or local regulations.

DE 10 2008 011228 A1 discloses a driver assisting method for detecting, by image processing of images acquired by a forward looking camera, a preceding vehicle emitting a blinking signal.

EP 1 033 694 A2 discloses a rear-view monitoring system for vehicles adapted to detect, by image processing of images acquired by a rearward looking camera, an overtaking vehicle through blink detection means for detecting blinks of winkers.

The object of the present invention is to provide a driver assisting system and method through which the above mentioned problems can be prevented.

The invention solves this object by the features of the independent claims. The detection of a periodically blinking warning light generated by an emergency vehicle can reliably be accomplished by image processing of images taken by said imaging means. The automatic detection is independent from the awareness of the driver, who is automatically informed or alarmed in case a periodically blinking warning light is detected. Since an optical signal is detected instead of an acoustical signal from the siren of the emergency vehicle, a reliable detection is possible even in the case of strong background noise. In many cases an already existing imaging means, preferably a rear view camera, can be used for the detection of the periodically blinking warning lights, such that additional imaging devices are not necessary.

According to the invention, in case an emergency vehicle is detected, the driver is informed and/or alerted correspondingly through a driver assisting means. In particular, the presence of a detected emergency vehicle may be indicated to the driver via optical, acoustical and/or haptical means. In a preferred embodiment, the presence of a detected emergency vehicle is displayed to the driver on a display device, optionally together with related information like category, speed and/or distance of the emergency vehicle.

Preferably the processing means is adapted to determine the blinking frequency of the warning light, which can be accomplished in particular by tracking a detected light source over several image frames. This allows the processing means to verify that the determined blinking frequency is equal to at least one pre-defined blinking frequency corresponding to the usual warning light blinking frequencies of emergency vehicles like police cars, ambulances or fire engines.

Preferably the processing means is adapted to determine the color of the warning light (blue, orange, red, etc.). This allows the processing means to verify that the determined color is equal to at least one pre-defined color corresponding to the usual warning light colors of emergency vehicles like police cars, ambulances or fire engines. The color information may thus be used to identify or classify the type of emergency vehicle, optionally in combination with geographical information because the emergency light colors may for example change from one country to another. For this application, the imaging means is expediently adapted to extract color information from the acquired images. Therefore, the imaging means preferably comprises a color camera or another color sensitive camera.

Preferably the processing means is adapted to verify that said warning light belongs to another vehicle in order to rule out other (in particular static) periodically blinking warning lights for example on gates, specific traffic lights, for example at railway crossings, and the like. For the same reason, the processing means preferably is adapted to verify that said warning light belongs to a moving vehicle. Furthermore, the processing means preferably is adapted to verify that said warning light has a pre-defined position with respect to another vehicle, for example on the roof of an emergency vehicle, or periodically blinking front lights of an emergency vehicle. In order to prove this, the processing means preferably comprises a vehicle detection means for detecting other vehicles by image processing of images taken by the imaging means.

Preferably the processing means is adapted to classify a determined warning light as belonging to at least one category of emergency vehicle, for example a police car, an ambulance or a fire engine, because different actions may be recommended for different types of emergency vehicles. The image processing software executed in the processing means preferably comprises a corresponding classifier. The classifier may be based on the recognition of pre-defined patterns of periodically blinking light structures in the acquired images. The classifier may advantageously be a trained classifier. According to the invention the processing means is adapted to determine a speed and a distance of the vehicle bearing the warning light. The processing means may then be adapted to control the driver assisting means depending on the determined speed and distance of the vehicle bearing the warning light. This is advantageous because an action in the case of a detected warning light is not always necessary. For example if the emergency vehicle is not approaching the own vehicle, in particular if the distance to the emergency vehicle increases, and/or if the emergency vehicle is still far away, informing the driver may be unnecessary and can preferably be omitted. According to the invention, therefore, the driver is informed only if the processing means determines that the determined distance of the emergency vehicle falls below a pre-determined threshold, and if the emergency vehicle approaches the own vehicle.

Preferably the processing means is adapted to control the driver assisting means depending on geographical position information, in particular from a vehicle receiver of a navigation satellite system, a cell phone network and/or another wireless network. It may also be possible to obtain geographical information from image processing of the acquired images, for example on the basis of the design and shape of road signs. The processing means is then able to control the driver assisting means depending on the geographical position information.

In the following the invention shall be illustrated on the basis of preferred embodiments with reference to the accompanying drawings, wherein:

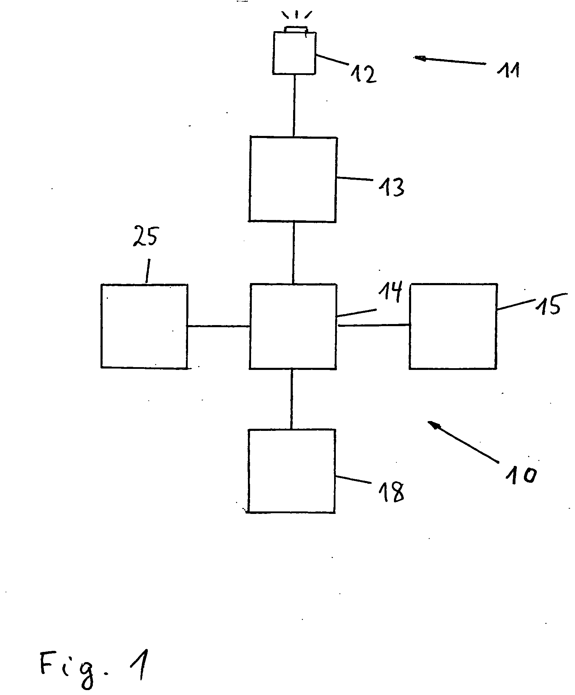

- Fig. 1: shows a schematic view of a driver assisting system; and
- Fig.2: shows a schematic view of a motor vehicle comprising a driver assisting system.

The driver assisting system 10 is mounted in a motor vehicle and comprises an imaging means 11 for acquiring images of a region surrounding the motor vehicle. Preferably the imaging means 11 comprises one or more optical imaging devices 12, in particular at least one camera. The imaging means 11 is a rear view camera 12 adapted to acquire images of a region behind the motor vehicle. One camera 12 forming a mono imaging means 11 may generally be sufficient; however, a plurality of imaging devices 12 is not excluded.

The imaging means 11 may be coupled to an image pre-processor 13 adapted to control the capture of images by the imaging means 11, receive the electrical signal containing the image information from the imaging means 11 and perform suited pre-processing to the images. The image pre-processor 13 may be realized by a dedicated hardware circuit. Alternatively the pre-processor 13, or part of its functions, can be realized in the electronic processing means 14.

The image data are then provided to an electronic processing means 14 where image and data processing to be described below is carried out by corresponding software. The processing means 14 is adapted to control at least one driver assistance means 18 depending on the result of the image and data processing. The driver assistance means 18 may in particular comprise a display means for displaying information relating to a detected object. However, the invention is not limited to a display means. The driver assistance means 18 may in addition or alternatively comprise a warning means adapted to provide a collision warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means.

The processing means 14 expediently has access to a memory means 25 and preferably to a receiver 15 of a satellite navigation system, a cell phone network or another wireless network. The processing means 14 preferably comprises further image recognition functions, for example lane detection, object detection, in particular recognition of other vehicles, or any kind of image processing of images acquired by the rear view camera 12.

The electronic processing means 14 is preferably programmed or programmable and expediently comprises a microprocessor or micro-controller. The electronic processing means 14 can preferably be realized in a digital signal processor (DSP). The image pre-processor 13, the electronic processing means 14 and the memory means 25 are preferably realised in an on-board electronic control unit (ECU) and may be connected to the imaging means 11 via a separate cable or a vehicle data bus. In another embodiment the ECU and the imaging device 12 can be integrated into a single unit. All steps from imaging, image pre-processing, image processing to activation or control of driver assistance means 18 are performed automatically and continuously during driving in real time.

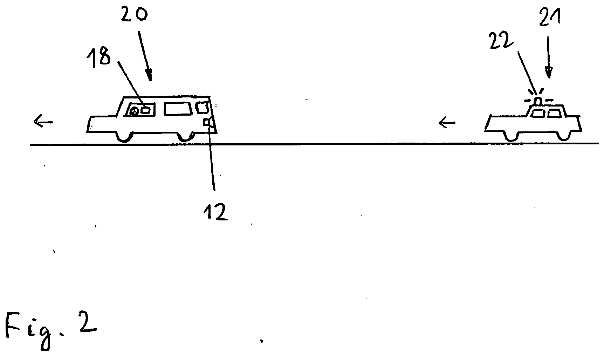

In the following a driver assisting method will be explained with respect to the example shown in Fig. 2. A vehicle 20 moving for example to the left has a rear view camera 12 and a display 18 visible to the driver, which may be installed for example in the middle console of the vehicle 20. If an emergency vehicle 21 with one or more periodically blinking warning lights 22 mounted on the roof of the emergency vehicle 21 is approaching from behind, the image processing means detects the blinking warning lights 22 in the images taken by the rear view camera 12 by suited image processing, in particular by detecting periodical changes in the light intensity in well defined regions of the acquired images.

After having detected periodically blinking warning lights 22, the processing means 14 performs suited processing for verifying that the periodically blinking warning lights 22 belongs to an emergency vehicle 21. In particular, the processing means 14 tracks the periodically blinking warning lights 22 over subsequent image frames and determines the blinking frequency or blinking frequencies of the periodically blinking warning lights 22. Preferably, the processing means 14 determines the color of the periodically blinking warning lights 22. The processing means 14 then proves whether the determined blinking frequency and/or warning light color correspond(s) to usual warning light blinking frequencies or colors of emergency vehicles. Such pre-defined information may for example be stored in the memory 25.

Preferably the processing means 14 is adapted to verify that the periodically blinking warning light 22 is belonging to a moving vehicle, and/or to classify the vehicle 21 as belonging to a pre-determined category like police car, ambulance, fire truck or the like. As another measure for verifying an emergency vehicle, the processing means 14 may be able to recognize a pre-determined light structure or distribution of the periodically blinking warning lights 22 in the images, and/or to verify that the periodically blinking warning lights 22 have a pre-determined relationship to the emergency vehicle 21, for example being positioned on the roof of the emergency vehicle 21 or corresponding to blinking front lights of the emergency vehicle 21.

The processing means 14 may decide that action is required only if the distance to the periodically blinking warning lights 22 is smaller than a pre-defined threshold and/or if the emergency vehicle 21 is approaching the vehicle 20, i.e. if the distance to the periodically blinking warning lights 22 is reducing.

If the processing means 14 has verified that the periodically blinking warning lights 22 belong to an emergency vehicle 22 and action is required, the processing means 14 displays a warning information for the driver on the display 18 indicating the existence of an emergency vehicle 21 in the surrounding of the vehicle 20, preferably together with a recommendation how the driver should react. For example, the processing means 14 may display the type of emergency vehicle 21 detected ("POLICE") and a recommendation like "SLOW DOWN", "STOP", "PULL TO THE RIGHT" or the like. In addition for example also the speed, the distance of the emergency vehicle 21 and/or other useful information may be displayed on the display 18.

The recommendation displayed to the driver by the processing means 14 may be made dependant on the geographical region in which the vehicle 20 is currently travelling, as available through the navigation, cell phone or other wireless receiver 15. For example, in different states or countries, legislation may require different reactions to an approaching emergency vehicle. Therefore, it is advantageous if the processing means 14 is capable of adapting the displayed recommendation to the geographical position of the vehicle 20.

In case a front camera or a camera looking sideways is used in addition to the rear view camera 12, the information displayed on the display may advantageously be adjusted according to the camera viewing direction.

## Claims

1. A driver assisting system (10) for a motor vehicle (20),
- comprising an imaging means (11) with a rear view camera (12) adapted to acquire images from a region behind the motor vehicle (20),
- a processing means (14) adapted to apply image processing to images acquired by said rear view camera (12), and a driver assisting means (18) controlled by said processing means (14) to provide information to the driver based on a result of said image processing,
- wherein said processing means (14) is adapted to detect from said image processing a periodically blinking warning light (22) of a vehicle (21),
**characterized in that**
- the processing means (14) is adapted to determine a speed and a distance of the vehicle bearing the periodically blinking warning light (22),
- said processing means is adapted to perform processing for verifying that the periodically blinking warning light (22) belongs to an emergency vehicle (21),
- and to control said driver assisting means (18) in order to inform and/or alert the driver in case the periodically blinking warning light (22) is detected,
- wherein the driver is informed only if the processing means determines that the determined distance of the emergency vehicle (21) falls below a pre-determined threshold, and if the emergency vehicle (21) approaches the own vehicle (20).

2. The driver assisting system as claimed in claim 1, wherein said processing means (14) is adapted to determine the blinking frequency of said periodically blinking warning light (22).

3. The driver assisting system as claimed in claim 2, wherein processing means (14) is adapted to verify that said determined blinking frequency corresponds to at least one pre-defined blinking frequency.

4. The driver assisting system as claimed in any one of the preceding claims, wherein said processing means (14) is adapted to determine the color of said periodically blinking warning light (22).

5. The driver assisting system as claimed in claim 4, wherein processing means (14) is adapted to verify that said determined color corresponds to at least one pre-defined color.

6. The driver assisting system as claimed in any one of the preceding claims, wherein said processing means (14) is adapted to verify that said periodically blinking warning light (22) belongs to a vehicle (21), in particular a moving vehicle (21).

7. The driver assisting system as claimed in any one of the preceding claims, wherein said processing means (14) is adapted to verify that said periodically blinking warning light (22) has a pre-defined pattern.

8. The driver assisting system as claimed in any one of the preceding claims, wherein said processing means (14) is adapted to verify that said periodically blinking warning light (22) has a pre-defined positional relationship to a motor vehicle (21).

9. The driver assisting system as claimed in any one of the preceding claims, wherein said processing means (14) is adapted to classify the determined periodically blinking warning light (22) as belonging to at least one category of emergency vehicle (21).

10. The driver assisting system as claimed in any one of the preceding claims, wherein said processing means (14) is adapted to control said driver assisting means (18) depending on the determined speed and/or distance of the vehicle (21) generating the periodically blinking warning light (22).

11. The driver assisting system as claimed in any one of the preceding claims, wherein said processing means (14) is adapted to control said driver assisting means (18) depending on geographical position information.

12. The driver assisting system as claimed in claim 11, wherein said processing means (14) is adapted to obtain said geographical position information from a vehicle receiver (15) of a navigation satellite system, a cellphone network and/or a wireless network, and/or from image processing of the acquired images.

13. A driver assisting method for a motor vehicle, comprising acquiring images from a region behind the motor vehicle with a rear view camera (12), applying image processing to images acquired by said rear view camera, providing driver assistance information to the driver based on a result of said image processing, detecting, from said image processing, a periodically blinking warning light (22), **characterized by** performing processing for determining a speed and a distance of the vehicle bearing the periodically blinking warning light (22), verifying that the periodically blinking warning light (22) belongs to an emergency vehicle (21), and by informing and/or alerting the driver in case the periodically blinking warning light (22) is detected, wherein the driver is informed only if it is determined that the determined distance of the emergency vehicle (21) falls below a pre-determined threshold, and if the emergency vehicle (21) approaches the own vehicle (20).

## Patentansprüche

1. Fahrerassistenzsystem (10) für ein Kraftfahrzeug (20),
- umfassend ein Abbildungsmittel (11) mit einer Rückfahrkamera (12), die so ausgelegt ist, dass sie Bilder von einem Bereich hinter dem Kraftfahrzeug (20) aufnimmt,
- ein Verarbeitungsmittel (14), das so ausgelegt ist, dass es an Bildern, die die Rückfahrkamera (12) aufgenommen hat, eine Bildbearbeitung vornimmt, und ein Fahrerassistenzmittel (18), das von dem Verarbeitungsmittel (14) so gesteuert wird, dass es dem Fahrer auf Grundlage eines Ergebnisses der Bildbearbeitung Informationen liefert,
- wobei das Verarbeitungsmittel (14) so ausgelegt ist, dass es aus der Bildverarbeitung ein in regelmäßigen Abständen blinkendes Warnlicht (22) eines Fahrzeugs (21) erkennt,
**dadurch gekennzeichnet, dass**
- das Verarbeitungsmittel (14) so ausgelegt ist, dass es eine Geschwindigkeit und einen Abstand des Fahrzeugs bestimmt, das das in regelmäßigen Abständen blinkende Warnlicht (22) trägt,
- das Verarbeitungsmittel so ausgelegt ist, dass es eine Verarbeitung zur Überprüfung vornimmt, ob das in regelmäßigen Abständen blinkende Warnlicht (22) zu einem Einsatzfahrzeug (21) gehört,
- und dass es das Fahrerassistenzmittel (18) steuert, damit es den Fahrer informiert und/oder warnt, wenn das in regelmäßigen Abständen blinkende Warnlicht (22) erkannt wird,
- wobei der Fahrer nur dann informiert wird, wenn das Verarbeitungsmittel feststellt, dass der ermittelte Abstand des Einsatzfahrzeugs (21) unter einen vorgegebenen Schwellenwert fällt und wenn sich das Einsatzfahrzeug (21) dem eigenen Fahrzeug (20) nähert.

2. Fahrerassistenzsystem nach Anspruch 1, wobei das Verarbeitungsmittel (14) so ausgelegt ist, dass es die Blinkfrequenz des in regelmäßigen Abständen blinkenden Warnlichts (22) ermittelt.

3. Fahrerassistenzsystem nach Anspruch 2, wobei das Verarbeitungsmittel (14) so ausgelegt ist, dass es überprüft, ob die ermittelte Blinkfrequenz mindestens einer vorher festgelegten Blinkfrequenz entspricht.

4. Fahrerassistenzsystem nach einem der vorhergehenden Ansprüche, wobei das Verarbeitungsmittel (14) so ausgelegt ist, dass es die Farbe des in regelmäßigen Abständen blinkenden Warnlichts (22) ermittelt.

5. Fahrerassistenzsystem nach Anspruch 4, wobei das Verarbeitungsmittel (14) so ausgelegt ist, dass es überprüft, ob die ermittelte Farbe mindestens einer vorher festgelegten Farbe entspricht.

6. Fahrerassistenzsystem nach einem der vorhergehenden Ansprüche, wobei das Verarbeitungsmittel (14) so ausgelegt ist, dass es überprüft, ob das in regelmäßigen Abständen blinkende Warnlicht (22) zu einem Fahrzeug (21), insbesondere einem sich bewegenden Fahrzeug (21), gehört.

7. Fahrerassistenzsystem nach einem der vorhergehenden Ansprüche, wobei das Verarbeitungsmittel (14) so ausgelegt ist, dass es überprüft, ob das in regelmäßigen Abständen blinkende Warnlicht (22) ein vorgegebenes Muster aufweist.

8. Fahrerassistenzsystem nach einem der vorhergehenden Ansprüche, wobei das Verarbeitungsmittel (14) so ausgelegt ist, dass es überprüft, ob das in regelmäßigen Abständen blinkende Warnlicht (22) eine vorgegebene Positionsbeziehung zu einem Kraftfahrzeug (21) aufweist.

9. Fahrerassistenzsystem nach einem der vorhergehenden Ansprüche, wobei das Verarbeitungsmittel (14) so ausgelegt ist, dass es das ermittelte in regelmäßigen Abständen blinkende Warnlicht (22) als mindestens einer Kategorie von Einsatzfahrzeugen (21) zugehörig einordnet.

10. Fahrerassistenzsystem nach einem der vorhergehenden Ansprüche, wobei das Verarbeitungsmittel (14) so ausgelegt ist, dass es das Fahrerassistenzmittel (18) in Abhängigkeit von der ermittelten Geschwindigkeit und/oder dem ermittelten Abstand des Fahrzeugs (21) steuert, das das in regelmäßigen Abständen blinkende Warnlicht (22) erzeugt.

11. Fahrerassistenzsystem nach einem der vorhergehenden Ansprüche, wobei das Verarbeitungsmittel (14) so ausgelegt ist, dass es das Fahrerassistenzmittel (18) in Abhängigkeit von geographischen Positionsinformationen steuert.

12. Fahrerassistenzsystem nach Anspruch 11, wobei das Verarbeitungsmittel (14) so ausgelegt ist, dass es die geographischen Positionsinformationen von einem Fahrzeugempfänger (15) eines Navigationssatellitensystems, eines Mobilfunknetzes und/oder eines Drahtlosnetzes und/oder aus der Bildverarbeitung der aufgenommenen Bilder erhält.

13. Fahrerassistenzverfahren für ein Kraftfahrzeug, das ein Aufnehmen von Bildern von einem Bereich hinter dem Kraftfahrzeug mit einer Rückfahrkamera (12), ein Vornehmen einer Bildverarbeitung an Bildern, die die Rückfahrkamera aufgenommen hat, ein Bereitstellen von Fahrerassistenzinformationen für den Fahrer auf Grundlage eines Ergebnisses der Bildverarbeitung, ein Erkennen, aus der Bildverarbeitung, eines in regelmäßigen Abständen blinkenden Warnlichts (22) umfasst, **gekennzeichnet durch** ein Vornehmen einer Verarbeitung zum Ermitteln einer Geschwindigkeit und eines Abstands des Fahrzeugs, das das in regelmäßigen Abständen blinkende Warnlicht (22) trägt, ein Überprüfen, ob das in regelmäßigen Abständen blinkende Warnlicht (22) zu einem Einsatzfahrzeug gehört (21), und durch ein Informieren und/oder Warnen des Fahrers, wenn das in regelmäßigen Abständen blinkende Warnlicht (22) erkannt wird, wobei der Fahrer nur dann informiert wird, wenn festgestellt wird, dass der ermittelte Abstand des Einsatzfahrzeugs (21) unter einen vorgegebenen Schwellenwert fällt und wenn sich das Einsatzfahrzeug (21) dem eigenen Fahrzeug (20) nähert.

## Revendications

1. Système d'assistance au conducteur (10) pour un véhicule à moteur (20),
- comprenant un moyen d'imagerie (11) doté d'une caméra de vision arrière (12) adaptée pour acquérir des images d'une zone située derrière le véhicule à moteur (20),
- un moyen de traitement (14) adapté pour appliquer un traitement d'image à des images acquises par ladite caméra de vision arrière (12), et un moyen d'assistance au conducteur (18) commandé par ledit moyen de traitement (14) pour la mise à disposition d'informations au conducteur sur la base d'un résultat dudit traitement d'image,
- dans lequel ledit moyen de traitement (14) est adapté pour détecter à partir du traitement d'image une lumière d'avertissement clignotant périodiquement (22) d'un véhicule (21),
**caractérisé en ce que**
- le moyen de traitement (14) est adapté pour déterminer une vitesse et une distance du véhicule portant la lumière d'avertissement clignotant périodiquement (22),
- ledit moyen de traitement est adapté pour exécuter un traitement afin de vérifier que la lumière d'avertissement clignotant périodiquement (22) appartient à un véhicule d'intérêt général prioritaire (21),
- et pour commander ledit moyen d'assistance au conducteur (18) afin d'informer et/ou d'alerter le conducteur dans le cas où la lumière d'avertissement clignotant périodiquement (22) est détectée,
- dans lequel le conducteur est informé uniquement si le moyen de traitement détermine que la distance déterminée du véhicule d'intérêt général prioritaire (21) tombe sous un seuil prédéterminé, et si le véhicule d'intérêt général prioritaire (21) s'approche du propre véhicule (20).

2. Système d'assistance au conducteur selon la revendication 1, dans lequel ledit moyen de traitement (14) est adapté pour déterminer la fréquence de clignotement de ladite lumière d'avertissement clignotant périodiquement (22).

3. Système d'assistance au conducteur selon la revendication 2, dans lequel ledit moyen de traitement (14) est adapté pour vérifier si ladite fréquence de clignotement déterminée correspond à au moins une fréquence de clignotement prédéfinie.

4. Système d'assistance au conducteur selon l'une quelconque des revendications précédentes, dans lequel ledit moyen de traitement (14) est adapté pour déterminer la couleur de ladite lumière d'avertissement clignotant périodiquement (22).

5. Système d'assistance au conducteur selon la revendication 4, dans lequel ledit moyen de traitement (14) est adapté pour vérifier si ladite couleur déterminée correspond à au moins une couleur prédéfinie.

6. Système d'assistance au conducteur selon l'une quelconque des revendications précédentes, dans lequel ledit moyen de traitement (14) est adapté pour vérifier si ladite lumière d'avertissement clignotant périodiquement (22) appartient à un véhicule (21), en particulier un véhicule (21) en train de se déplacer.

7. Système d'assistance au conducteur selon l'une quelconque des revendications précédentes, dans lequel ledit moyen de traitement (14) est adapté pour vérifier si ladite lumière d'avertissement clignotant périodiquement (22) possède un motif prédéfini.

8. Système d'assistance au conducteur selon l'une quelconque des revendications précédentes, dans lequel ledit moyen de traitement (14) est adapté pour vérifier si ladite lumière d'avertissement clignotant périodiquement (22) possède une relation de position prédéfinie par rapport à un véhicule à moteur (21).

9. Système d'assistance au conducteur selon l'une quelconque des revendications précédentes, dans lequel ledit moyen de traitement (14) est adapté pour classer la lumière d'avertissement clignotant périodiquement (22) déterminée comme appartenant à au moins une catégorie de véhicule d'intérêt général prioritaire (21).

10. Système d'assistance au conducteur selon l'une quelconque des revendications précédentes, dans lequel ledit moyen de traitement (14) est adapté pour commander ledit moyen d'assistance au conducteur (18) en fonction de la vitesse et/ou distance déterminée(s) du véhicule (21) générant la lumière d'avertissement clignotant périodiquement (22).

11. Système d'assistance au conducteur selon l'une quelconque des revendications précédentes, dans lequel ledit moyen de traitement (14) est adapté pour commander ledit moyen d'assistance au conducteur (18) en fonction d'informations géographiques de position.

12. Système d'assistance au conducteur selon la revendication 11, dans lequel ledit moyen de traitement (14) est adapté pour obtenir lesdites informations géographiques de position d'un récepteur pour véhicule (15) d'un système de satellite de navigation, d'un réseau de téléphonie mobile et/ou d'un réseau sans fil, et/ou du traitement d'image des images acquises.

13. Procédé d'assistance au conducteur pour un véhicule à moteur, comprenant l'acquisition d'images d'une zone située derrière le véhicule à moteur avec une caméra de vision arrière (12), l'application d'un traitement d'image à des images acquises par ladite caméra de vision arrière, la mise à disposition d'informations d'assistance au conducteur sur la base d'un résultat dudit traitement d'image, la détection, à partir dudit traitement d'image, d'une lumière d'avertissement clignotant périodiquement (22), **caractérisé par** l'exécution d'un traitement pour déterminer une vitesse et une distance du véhicule portant la lumière d'avertissement clignotant périodiquement (22), la vérification que la lumière d'avertissement clignotant périodiquement (22) appartient à un véhicule d'intérêt général prioritaire (21), et par l'information et/ou l'avertissement du conducteur dans le cas où la lumière d'avertissement clignotant périodiquement (22) est détectée, le conducteur étant informé uniquement s'il est déterminé que la distance déterminée du véhicule d'intérêt général prioritaire (21) tombe sous un seuil prédéterminé, et si le véhicule d'intérêt général prioritaire (21) s'approche du propre véhicule (20).
